# EUROPÄISCHE PATENTSCHRIFT

(11) **EP 0 898 532 B1**
(45) Veröffentlichungstag und Bekanntmachung des Hinweises auf die Patenterteilung: **03.04.2002**
(21) Anmeldenummer: 97923897.9
(22) Anmeldetag: 14.05.1997
(51) Int. Cl.: B60T 11/224, B60T 8/48

(54) **HAUPTZYLINDERANORDNUNG FÜR EINE HYDRAULISCHE FAHRZEUGBREMSANLAGE**
MASTER CYLINDER ARRANGEMENT FOR A VEHICLE'S HYDRAULIC BRAKING SYSTEM
DISPOSITIF MAITRE-CYLINDRE POUR UN SYSTEME DE FREINAGE HYDRAULIQUE DE VEHICULE

(30) Priorität: 20.05.1996 DE 19620228
(43) Veröffentlichungstag der Anmeldung: 03.03.1999
(73) Patentinhaber: Lucas Industries Limited, London W1Y 4DJ (GB)
(72) Erfinder: DIERINGER, Werner, D-56179 Vallendar (DE)
(74) Vertreter: Beyer, Andreas, Dr.
(86) Internationale Anmeldenummer: EP9702472
(87) Internationale Veröffentlichungsnummer: WO9744226

(56) Entgegenhaltungen:
- DE-A- 2 430 167
- DE-A- 3 619 793
- GB-A- 2 170 287

## Beschreibung

Die Erfindung betrifft einen Hauptzylinder nach dem Oberbegriff des Anspruchs 1, wie er beispielsweise aus der DE-A-36 19 793 bekannt ist. Solche Hauptzylinder werden millionenfach in Kraftfahrzeuge eingebaut und sind daher allgemein bekannt. Sie sind üblicherweise mit einem Bremskraftverstärker gekoppelt, der die von einem Fahrer eingeleitete Betätigungskraft erhöht und so dafür sorgt, daß der Fahrer hohe Bremskräfte mit einer relativ niedrigen Betätigungskraft aufbringen kann. Die auf den Hauptzylinder bei einer Betätigung einwirkende Kraft setzt sich demnach aus einem Fußkraftanteil, der vom Fahrer aufgebracht wird, und einem Anteil zusammen, der durch den Bremskraftverstärker aufgebracht wird. Häufig ist der Bremskraftverstärker ein Unterdruckbremskraftverstärker.

Herkömmlicherweise sind Bremskraftverstärker so dimensioniert, daß die von einem durchschnittlichen Fahrer maximal aufbringbare und durch den Bremskraftverstärker erhöhte Betätigungskraft dazu ausreicht, alle Räder eines Fahrzeuges auch bei hohen Reibwerten zwischen Rad und Fahrbahn zum Blockieren zu bringen. Die Bremskraftverteilung eines Fahrzeuges ist dabei üblicherweise so ausgelegt, daß den vorderen Rädern des Fahrzeuges deutlich mehr Bremskraft zugeleitet wird als den hinteren Rädern, um ein frühzeitiges Blockieren der Hinterräder zu vermeiden, das durch die Entlastung der Hinterräder aufgrund der beim Bremsen auftretenden dynamischen Achslastverlagerung begünstigt wird. Seit einiger Zeit sind viele Fahrzeuge auch mit Bremsschlupfregelanlagen ausgestattet, die ein Blockieren der Fahrzeugräder während einer starken Bremsung verhindern und so das Fahrzeug lenkfähig halten. Neuerdings werden solche Bremsschlupfregelsysteme nicht nur beim Bremsen, sondern auch während des übrigen Fahrbetriebs eingesetzt, um durch gezieltes Abbremsen einzelner Fahrzeugräder kritische Fahrzustände zu verhindern oder wenigstens zu entschärfen oder um ein Durchdrehen von Antriebsrädern auf rutschigem Untergrund zu vermeiden.

Erweiterte Systeme dieser Art sind unter den Begriffen Fahrdynamikregelungssystem (FDR-System) und Antriebsschlupfregelungssystem (ASR-System) bekannt geworden. Die zuletzt genannten Systeme können einzelne Fahrzeugräder selbst dann abbremsen, wenn der Fahrer des Fahrzeugs die Bremse nicht betätigt. Dies setzt naturgemäß voraus, daß der mit dem Hauptzylinder zusammenwirkende Bremskraftverstärker fahrerunabhängig betätigbar ist, um gegebenenfalls, d.h. beispielsweise beim Feststellen eines kritisch werdenden Fahrzustandes oder eines durchdrehenden Antriebsrades, eine Betätigungskraft auf den Hauptzylinder ausüben zu können. In diesem Zusammenhang tritt das Problem auf, daß die vom Bremskraftverstärker allein aufbringbare Betätigungskraft unter Umständen nicht mehr dazu ausreicht, eine zum Abbremsen einzelner Fahrzeugräder bis zur Blockiergrenze notwendige Bremskraft zu erzeugen. Zwar läßt sich dieses Problem bis zu einem gewissen Grad durch die Verwendung entsprechend größer dimensionierter Bremskraftverstärker lösen, jedoch gerät man damit speziell bei kompakteren Kraftfahrzeugen aufgrund des dort limitierten Einbauraums schnell an Grenzen. Es kommt erschwerend hinzu, daß der Einsatz eines FDR-Systems nicht beim Bremsen, sondern im normalen Fahrbetrieb erfolgt, wo z.B. die die Hinterräder entlastende, dynamische Achslastverlagerung nicht auftritt. Im Rahmen einer Regelung durch das FDR-System ist deshalb zum Abbremsen eines Hinterrades bis zur Blockiergrenze eine erheblich höhere Bremskraft erforderlich als selbst bei einer starken Betriebsbremsung. Auch die dynamische Radlast des kurvenäußeren Vorderrades kann aufgrund der sich infolge der Fliehkraft zum Kurvenaußenrand neigenden Fahrzeugkarosserie so zunehmen, daß die zu seinem Blockieren notwendige Bremskraft über derjenigen liegt, die zu einem Blockieren bei einer Geradeausbremsung erforderlich wäre. Ähnliches gilt für das Abbremsen durchrutschender, angetriebener Hinterräder im Rahmen einer Regelung durch ein ASR-System. Insbesondere bei mit FDR-Systemen ausgerüsteten Fahrzeugen, aber auch bei solchen mit einem ASR-System, können daher im normalen Fahrbetrieb Zustände auftreten, bei denen die vom Bremskraftverstärker allein bereitgestellte und auf den Hauptzylinder einwirkende Betätigungskraft nicht mehr zur Erzeugung des Bremsdruckes ausreicht, der vom FDR-System bzw. vom ASR-System zur Vermeidung oder Entschärfung eines kritischen Fahrzustandes angefordert wird.

Der Erfindung liegt deshalb die Aufgabe zugrunde, einen Hauptzylinder für eine hydraulische Fahrzeugbremsanlage bereitzustellen, der im Zusammenwirken mit einem gegebenen Bremskraftverstärker wahlweise auf einfache Art die Erzeugung höherer Bremsdrücke ermöglicht.

Diese Aufgabe ist erfindungsgemäß durch einen Hauptzylinder gelöst, der die im Anspruch 1 angegebenen Merkmale aufweist. Erfindungsgemäß wird die Tatsache ausgenutzt, daß normalerweise der in der Bohrung des Hauptzylinders angeordnete Kolben eine hydraulisch wirksame Fläche aufweist, die größer als die hydraulisch wirksame Fläche des diesen Kolben verschiebenden Betätigungsgliedes ist. Durch wahlweises Verbinden der Druckkammer mit der auf der anderen Seite des Kolbens angeordneten, d.h. sich auf der Seite des Betätigungsgliedes befindenden Nachlaufkammer kann die Druckübersetzung des Hauptzylinders im Verhältnis der hydraulisch wirksamen Fläche des Kolbens zur hydraulisch wirksamen Fläche des Betätigungsgliedes erhöht werden, da im Fall einer flüssigkeitsleitenden Verbindung zwischen Druckkammer und Nachlaufkammer in diesen beiden Kammern immer derselbe Fluiddruck herrscht und deshalb in der Druckkammer nur noch die hydraulisch wirksame Fläche des Betätigungsgliedes maßgebend für die Druckübersetzung des Hauptzylinders ist. Die Erhöhung der Druckübersetzung läßt sich demnach durch Variation der hydraulisch wirksamen Fläche des Kolbens bzw. der hydraulisch wirksamen Fläche des Betätigungsgliedes in weiten Grenzen einstellen. Hat beispielsweise das Betätigungsglied einen Durchmesser, der nur halb so groß wie der Durchmesser des Kolbens ist, so steigt die Druckübersetzung des Hauptzylinders beim Verbinden der Druckkammer mit der Nachlaufkammer um den Faktor 4. Zwar geht die erfindungsgemäße Erhöhung der Druckübersetzung des Hauptzylinders zu Lasten der verschiebbaren Flüssigkeitsmenge, dies wirkt sich jedoch nicht nachteilig aus, da im Rahmen einer Fahrdynamikregelung meist nur ein einziges Fahrzeugrad, höchstens jedoch zwei Fahrzeugräder abgebremst werden müssen und die übrigen Fahrzeugräder währenddessen vom Hauptzylinder hydraulisch getrennt sind, beispielsweise mittels der Elektromagnetventile der Bremsdruckregelanlage.

Erfindungsgemäß kann also ohne vergrößerten Bremskraftverstärker mittels der die Druckkammer und die Nachlaufkammer wahlweise flüssigkeitsleitend verbindenden Einrichtung dann ein höherer Bremsdruck an einzelnen Fahrzeugrädern bereitgestellt werden, wenn das FDR-System einen solchen Bremsdruck anfordert. Im Normalbetrieb wird die Verbindung zwischen Druckkammer und Nachlaufkammer jedoch meistens gesperrt sein, da die erwähnten, vom Bremskraftverstärker allein aufzubringenden, hohen Bremsdrücke im Rahmen normaler Betriebsbremsungen nicht benötigt werden. Der erfindungsgemäße Hauptzylinder funktioniert also den meisten Teil der Zeit wie ein herkömmlicher Hauptzylinder ohne wahlweise Druckübersetzungserhöhung. Wenn die flüssigkeitsleitende Verbindung zwischen der Druckkammer und der Nachlaufkammer unterbrochen ist, steht die Nachlaufkammer wie auch bei einem herkömmlichen Hauptzylinder in Flüssigkeitsverbindung mit einem Vorratsbehälter für Hydraulikfluid. Sind dagegen die Druckkammer und die Nachlaufkammer flüssigkeitsleitend miteinander verbunden, dann ist die Nachlaufkammer erfindungsgemäß von dem Vorratsbehälter für Hydraulikfluid abgesperrt.

Bevorzugt umfaßt die Einrichtung zum flüssigkeitsleitenden Verbinden von Druckkammer und Nachlaufkammer ein elektrisch ansteuerbares Ventil, das die Verbindung zwischen der Druckkammer und der Nachlaufkammer wahlweise sperrt oder freigibt. Vorteilhaft ist dieses Ventil als ein Umschaltventil ausgebildet, das die Nachlaufkammer in seiner einen Stellung mit dem Vorratsbehälter für Hydraulikfluid und in seiner anderen Stellung mit der Druckkammer verbindet. In dieser anderen Stellung sperrt das Umschaltventil dann gleichzeitig die Nachlaufkammer gegenüber dem Vorratsbehälter für Hydraulikfluid ab.

Um eine Verlängerung des Bremspedalweges vermeiden, zu der es bei der soeben beschriebenen Ausführungsform beispielsweise kommt, wenn auf einen durch das FDR-System fahrerunabhängig ausgelösten Bremsvorgang, der eine hohe Bremskraft benötigt, sofort eine normale Fußbremsung durch den Fahrer folgt, ist gemäß einer weitergebildeten Ausführungsform eines erfindungsgemäßen Hauptzylinders der Nachlaufkammer eine Füllstufe vorgeschaltet, die aus einer Füllkammer und einem darin aufgenommenen Füllkolben besteht. Die Füllkammer ist einerseits durch ein in Betätigungsrichtung des Hauptzylinders öffnendes Rückschlagventil mit der Nachlaufkammer und andererseits mit einem der Einlaßseite einer Hydraulikpumpe zugeordneten Fluidspeicher flüssigkeitsleitend verbunden. Die Druckseite der Hydraulikpumpe steht in Flüssigkeitsverbindung mit der Druckkammer. Sind Druckkammer und Nachlaufkammer flüssigkeitsleitend miteinander verbunden, kann aufgrund des sich in der Nachlaufkammer aufbauenden Drucks Hydraulikfluid nicht mehr aus der Füllkammer in die Nachlaufkammer überführt werden. Statt dessen wird das Hydraulikfluid aus der Füllkammer in den Fluidspeicher auf der Ansaugseite der Hydraulikpumpe geleitet. Wenn der Füllkolben eine hydraulisch wirksame Fläche hat, die der Differenz aus der hydraulisch wirksamen Fläche des Kolbens und der hydraulisch wirksamen Fläche des Betätigungsgliedes entspricht, ist gewährleistet, daß das aus der Füllkammer in den Fluidspeicher überführte Flüssigkeitsvolumen genau demjenigen Flüssigkeitsvolumen entspricht, das aus der Druckkammer in die Nachlaufkammer verdrängt wird. Mit einer solchen Anordnung läßt sich eine Betätigungswegverlängerung des Hauptzylinders trotz eingeschalteter Druckübersetzungserhöhung vermeiden, wenn das aus der Füllkammer in den Fluidspeicher gelangte Flüssigkeitsvolumen mittels der Hydraulikpumpe nahezu verzögerungsfrei der Druckkammer zugeführt wird. Die Hydraulikpumpe muß dazu so ausgelegt sein, daß sie schnell anläuft und jederzeit gegen den in der Druckkammer herrschenden Druck fördern kann. Der als Zwischenspeicher fungierende Fluidspeicher und die Hydraulikpumpe müssen nicht separat vorgesehen werden, denn übliche Bremsdruckregelanlagen weisen diese Komponenten bereits auf.

Vorteilhaft ist bei der zuletzt beschriebenen Ausführungsform eines erfindungsgemäßen Hauptzylinders die Hydraulikpumpe so gestaltet, daß nur das während einer Betätigung des Hauptzylinders aus der Füllkammer in den Fluidspeicher verdrängte Flüssigkeitsvolumen in die Druckkammer gefördert werden kann. Besonders einfach läßt sich dies dadurch erreichen, daß die Hydraulikpumpe vom nicht selbst ansaugenden Typ ist. Unter der Voraussetzung, daß der Fluidspeicher auf der Ansaugseite der Hydraulikpumpe zu Beginn einer Betätigung des Hauptzylinders leer ist, kann die Hydraulikpumpe dann nämlich nur das während der Betätigung in den Fluidspeicher gelangende Flüssigkeitsvolumen in die Druckkammer fördern.

Gemäß einer bevorzugten Ausgestaltung ist der Füllkolben durch das stangenförmige Betätigungsglied mit dem Kolben zumindest in Betätigungsrichtung starr gekoppelt, so daß eine absolut synchrone Verschiebung des Kolbens und des Füllkolbens gewährleistet ist.

Entsprechend der heutzutage bei hydraulischen Bremsanlagen für Kraftfahrzeuge üblichen zwei Bremskreise weisen bevorzugte Ausführungsformen des erfindungsgemäßen Hauptzylinders einen als Schwimmkolben ausgebildeten zweiten Kolben auf, der abdichtend und verschiebbar in der Hauptzylinderbohrung geführt ist und in letzterer eine zweite Druckkammer begrenzt, in der der Bremsdruck für den zweiten Bremskreis aufgebaut wird.

Alle Ausführungsformen des erfindungsgemäßen Hauptzylinders sind in erster Linie für einen Einsatz mit einem fahrerunabhängig betätigbaren Bremskraftverstärker vorgesehen, der insbesondere ein Unterdruckbremskraftverstärker ist. Bei einem Unterdruckbremskraftverstärker läßt sich eine fahrerunabhängige Betätigung beispielsweise dadurch einfach realisieren, daß das Steuerventil, welches die Zufuhr von Atmosphärendruck in die Arbeitskammer des Bremskraftverstärkers steuert, elektromagnetisch betätigbar ausgeführt ist.

Die Einrichtung zum flüssigkeitsleitenden Verbinden von Druckkammer und Nachlaufkammer umfaßt bevorzugt ein Steuergerät, welches bei einer fahrerunabhängigen Betätigung des Bremskraftverstärkers ein Signal zur Herstellung der flüssigkeitsleitenden Verbindung zwischen der Druckkammer und der Nachlaufkammer abgibt. Die Schaltung kann dabei so sein, daß das Signal zur Herstellung der flüssigkeitsleitenden Verbindung erst während einer fahrerunabhängigen Betätigung des Bremskraftverstärkers dann erfolgt, wenn ein Bremsdruck angefordert wird, der ohne eine eingeschaltete Druckübersetzungserhöhung nicht bereitgestellt werden kann. Die Schaltung kann aber auch so ausgeführt sein, daß das Signal zur Herstellung der flüssigkeitsleitenden Verbindung von vornherein immer dann abgegeben wird, wenn eine fahrerunabhängige Betätigung des Bremskraftverstärkers erfolgt.

Zwei Ausführungsbeispiele eines erfindungsgemäßen Hauptzylinders werden im folgenden anhand der beigefügten, schematischen Zeichnungen näher erläutert. Es zeigt:
- Fig. 1: ein teilweise im Schnitt wiedergegebenes, erstes Ausführungsbeispiel eines erfindungsgemäßen Hauptzylinders, der an eine herkömmliche hydraulische Bremsanlage mit Bremsschlupfregelsystem angeschlossen ist,
- Fig. 2: den Hauptzylinder aus Fig. 1, jetzt jedoch mit eingeschalteter Druckübersetzungserhöhung,
- Fig. 3: ein teilweise im Schnitt wiedergegebenes, zweites Ausführungsbeispiel eines erfindungsgemäßen Hauptzylinders, der an eine hydraulische Fahrzeugbremsanlage mit Bremsschlupfregelsystem angeschlossen ist, und
- Fig. 4: den Hauptzylinder aus Fig. 3, jetzt jedoch mit eingeschalteter Druckübersetzungserhöhung.

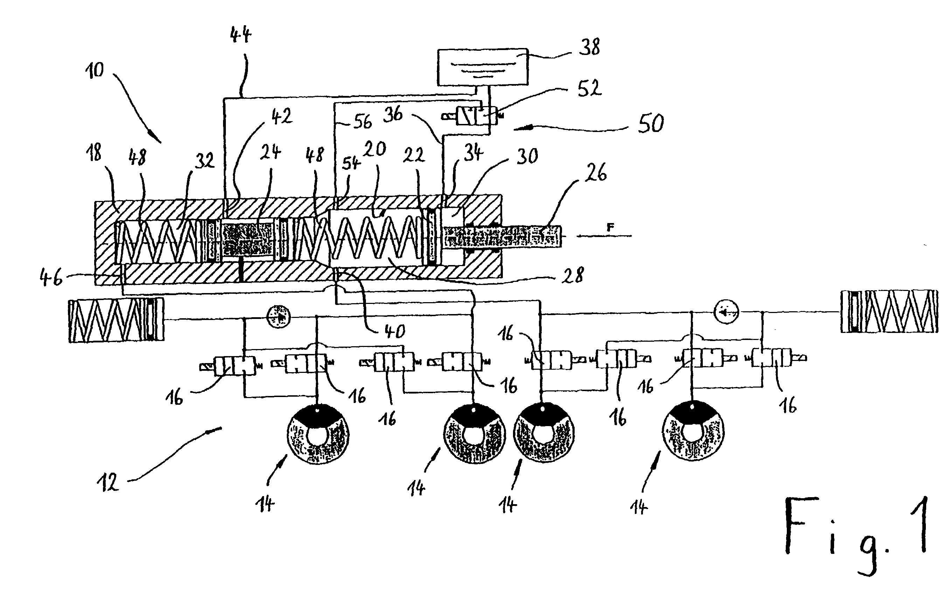

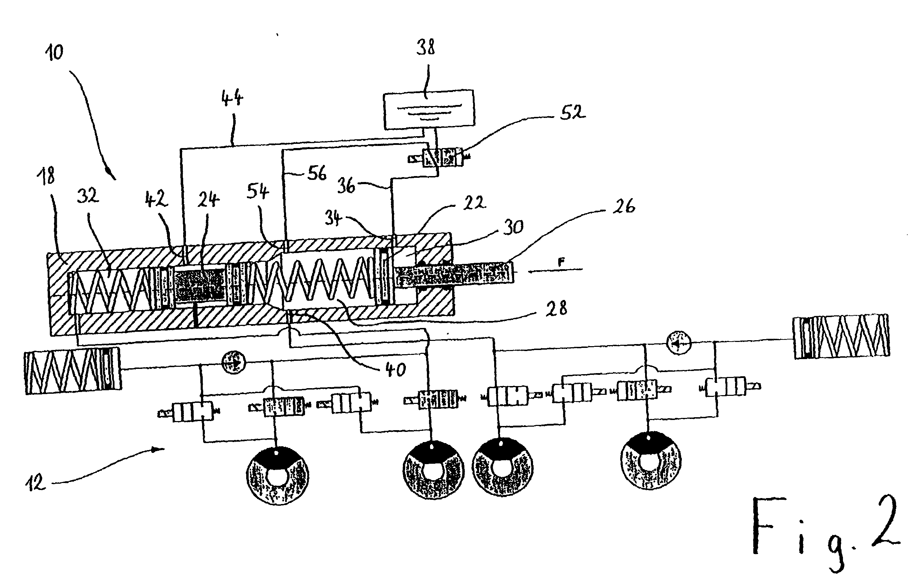

Fig. 1 und Fig. 2 zeigen schematisch ein erstes Ausführungsbeispiel eines Hauptzylinders 10 einer hydraulischen Fahrzeugbremsanlage 12, die vier hier als Scheibenbremsen ausgestaltete Bremsen 14 umfaßt, von denen jede einem hier nicht dargestellten Fahrzeugrad zugeordnet ist, und die mit einem Bremsschlupfregelsystem ausgestattet ist. Jeder Bremse 14 sind zwei Elektromagnetventile 16 zugeordnet, so daß das Bremsschlupfregelsystem den Bremsdruck an jedem einzelnen Fahrzeugrad unabhängig von den übrigen Fahrzeugrädern aufbauen, halten oder abbauen kann. Der Aufbau und die Arbeitsweise solcher Bremsschlupfregelsysteme, die häufig auch als Antiblockiersysteme bezeichnet werden, ist Fachleuten auf diesem Gebiet allgemein bekannt und braucht daher nicht weiter erläutert zu werden.

Der Hauptzylinder 10 hat ein meist langgestrecktes Gehäuse 18 mit einer darin ausgebildeten Bohrung 20, in der ein im folgenden als Primärkolben bezeichneter Kolben 22 und ein im folgenden als Sekundärkolben bezeichneter und als Schwimmkolben ausgebildeter Kolben 24 abdichtend und verschiebbar geführt sind. Der Primärkolben 22 ist mechanisch mit einem stangenförmigen Betätigungsglied 26 verbunden, das abdichtend und verschiebbar durch die Wandung des Gehäuses 18 geführt ist und stirnseitig aus dem Gehäuse 18 herausragt. Mit dem Betätigungsglied 26 läßt sich eine Eingangskraft F auf den Primärkolben 22 übertragen. Diese Eingangskraft F wird zum Teil von einem hier nicht dargestellten Bremskraftverstärker erzeugt, der mit dem Betätigungsglied 26 mechanisch gekoppelt ist und so die durch ihn bereitgestellte Betätigungskraft auf den Hauptzylinder 10 übertragen kann.Der Bremskraftverstärker ist seinerseits auf übliche Weise mit einem ebenfalls nicht dargestellten Bremspedal der Fahrzeugbremsanlage 12 gekoppelt.

Der Primärkolben 22 begrenzt in der Bohrung 20 zum einen zusammen mit dem Sekundärkolben 24 eine erste Druckkammer 28, die einem ersten Bremskreis der als Zweikreissystem ausgeführten Fahrzeugbremsanlage 12 zugeordnet ist, und zum anderen eine Nachlaufkammer 30, die sich bezüglich des Primärkolbens 22 auf der Seite des Betätigungsgliedes 26 befindet. Der Sekundärkolben 24 begrenzt darüber hinaus in der Bohrung 20 eine zweite Druckkammer 32, die dem zweiten Bremskreis der Fahrzeugbremsanlage 12 zugeordnet ist. In betriebsbereitem Zustand sind die beiden Druckkammern 28 und 32 sowie die Nachlaufkammer 30 mit Hydraulikfluid gefüllt.

Zur Bremsdruckerzeugung wird die Eingangskraft F von dem Betätigungsglied 26 auf den Primärkolben 22 übertragen, der sich daraufhin bezogen auf Fig. 1 nach links verschiebt. Sobald der Primärkolben 22 eine Nachlaufbohrung 34 überfährt, die die erste Druckkammer 28 in der hier nicht gezeigten Ausgangsstellung des Primärkolbens 22 zu Druckausgleichszwecken über eine Leitung 36 mit einem Vorratsbehälter 38 für Hydraulikfluid verbindet, baut sich in der Druckkammer 28 ein der Eingangskraft F proportionaler Bremsdruck auf, der durch einen Druckkammerauslaß 40 dem ersten Bremskreis zugeführt wird. Aufgrund des sich in der ersten Druckkammer 28 aufbauenden Drucks verschiebt sich der Sekundärkolben 24 ebenfalls nach links, so daß nach Überfahren einer der zweiten Druckkammer 32 zugeordneten Nachlaufbohrung 42, die analog der Nachlaufbohrung 34 über eine Leitung 44 mit dem Vorratsbehälter 38 für Hydraulikfluid verbunden ist, auch in der zweiten Druckkammer 32 ein zur Eingangskraft F proportionaler Bremsdruck aufgebaut wird, der durch einen Druckkammerauslaß 46 dem zweiten Bremskreis zugeführt wird. Mit 48 sind zwei nur schematisch dargestellte Rückstellfedern bezeichnet, die die beiden Kolben 22 und 24 nach Fortfall der Betätigungs- bzw. Eingangskraft F in ihre Ausgangsstellungen zurückdrücken. Sobald die beiden Kolben 22 und 24 auf dem Weg in ihre Ausgangsstellungen die Nachlaufbohrungen 34 und 42 in umgekehrter Richtung überfahren haben, findet in den Druckkammern 28 und 32 über die Leitungen 36 und 44 ein Druckausgleich mit der Atmosphäre statt.

Die vom Hauptzylinder 10 erzielte Druckübersetzung bezüglich der Eingangskraft F hängt für den ersten Bremskreis von der hydraulisch wirksamen Fläche A des Primärkolbens 22 ab. Um bei einer vorgegebenen Eingangskraft F trotz eines geometrisch vorgegebenen Primärkolbens 22 wahlweise eine Druckübersetzungserhöhung zu erzielen, weist der Hauptzylinder 10 eine Einrichtung 50 auf, mit der die erste Druckkammer 28 und die Nachlaufkammer 30 flüssigkeitsleitend miteinander verbunden werden können. Die Einrichtung 50 umfaßt dazu ein in der Leitung 36 angeordnetes und elektrisch ansteuerbares Ventil 52 sowie in der ersten Druckkammer 28 eine Überströmöffnung 54, an die sich eine zum Ventil 52 führende Leitung 56 anschließt.

In einer ersten Stellung (s. Fig. 1) sperrt das Ventil 52 die Leitung 56 ab und gibt die Leitung 36 frei, so daß eine Flüssigkeitsverbindung zwischen der Nachlaufbohrung 34 und dem Vorratsbehälter 38 hergestellt ist. Dies ist die Normalstellung des Ventils 52, in der die Druckübersetzung des Hauptzylinders 10 von der hydraulisch wirksamen Fläche A des Primärkolbens 22 bestimmt wird.

In einer zweiten Stellung (s. Fig. 2) sperrt das Ventil 52 die Leitung 36 gegenüber dem Vorratsbehälter 38 ab und verbindet sie statt dessen mit der Leitung 56. Auf diese Weise ist, nachdem der Primärkolben 22 die Nachlaufbohrung 34 überfahren hat, eine flüssigkeitsleitende Verbindung zwischen der ersten Druckkammer 28 und der gegenüber der Atmosphäre abgeperrten Nachlaufkammer 30 hergestellt, so daß die beiden Kammern 28 und 30 hinsichtlich des in ihnen herrschenden Drucks ein kommunizierendes System bilden. Die Druckübersetzung des Hauptzylinders 10 bezüglich der ersten Druckkammer 28 wird nun von der gegenüber der Fläche A kleineren hydraulisch wirksamen Fläche B des Betätigungsgliedes 26 bestimmt, denn ein der Differenz zwischen den Flächen A und B entsprechendes Flüssigkeitsvolumen wird während einer Betätigung des Hauptzylinders 10 aus der ersten Druckkammer 28 in die Nachlaufkammer 30 verschoben, ohne bremsdruckerhöhend zu wirken. Bezüglich dieses Flüssigkeitsvolumenanteils herrscht deshalb am Primärkolben 22 ein Kräftegleichgewicht. Somit kann dann, wenn sich das Ventil 52 in der zweiten Stellung befindet, in der ersten Druckkammer 28 bei gleicher Eingangskraft F ein um den Faktor A/B höherer Bremsdruck erzielt werden, allerdings auf Kosten eines entsprechend größeren Verschiebeweges des Kolbens 22. Das bedeutet, daß die Ausgangskraft eines gegebenen, fahrerunabhängig betätigbaren Bremskraftverstärkers wahlweise in einen erhöhten Bremsdruck umsetzbar ist, ohne daß hierzu am Hauptzylinder 10 tiefgreifende konstruktive Änderungen notwendig wären. Der verlängerte Verschiebeweg des Kolbens 22 ist dabei im Zusammenhang mit FDR-Systemen nicht von Nachteil, da im Regelfall nur einer einzigen Bremse 14 Bremsdruck zugeführt werden muß, während die übrigen Bremsen 14 hydraulisch abgesperrt sind, so daß das zur Druckerhöhung zu verschiebende Flüssigkeitsvolumen sehr viel geringer ist als bei einer normalen Bremsung, bei der alle vier Bremsen 14 mit Bremsdruck versorgt werden müssen.

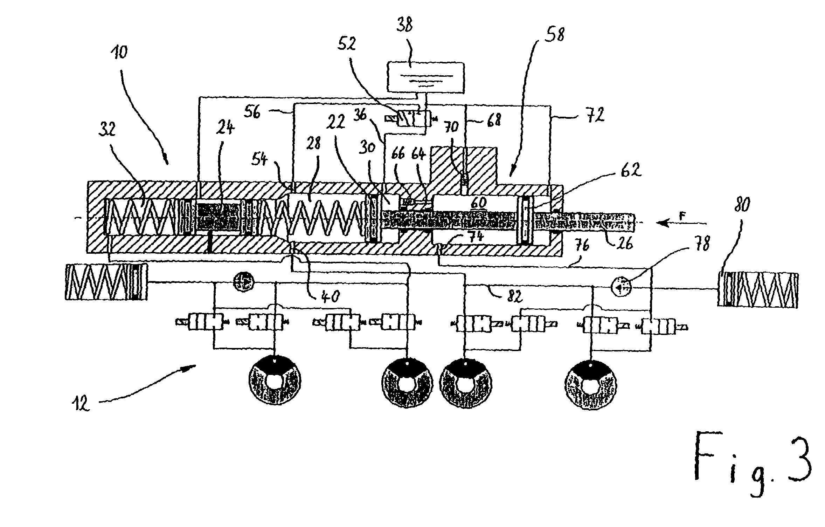

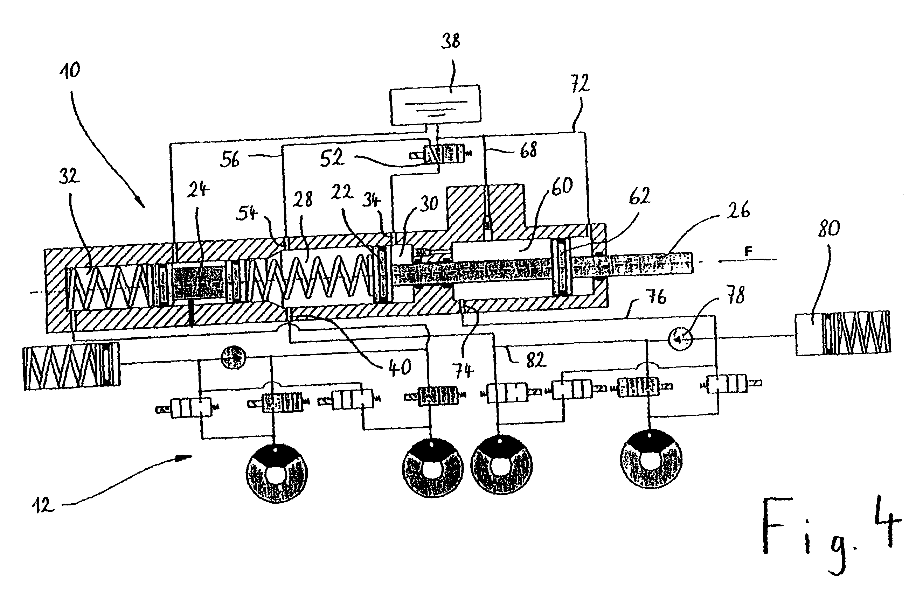

In Fig. 3 und Fig. 4 ist ein abgewandeltes, zweites Ausführungsbeispiel des Hauptzylinders 10 dargestellt, bei dem trotz einer wahlweise möglichen Druckübersetzungserhöhung kein vergrößerter Verschiebeweg des Kolbens 22 und damit kein verlängerter Bremspedalweg auftritt. Im folgenden wird das zweite Ausführungsbeispiel nur hinsichtlich seiner zum ersten Ausführungsbeispiel vorhandenen Unterschiede näher beschrieben. Der Hauptunterschied besteht in einer der Nachlaufkammer 30 vorgeschalteten Füllstufe 58, die aus einer im Gehäuse 18 des Hauptzylinders 10 ausgebildeten Füllkammer 60, die von dem stangenförmigen Betätigungsglied 26 durchsetzt wird, und einem darin aufgenommenen Füllkolben 62 besteht. Die Füllkammer 60, die in betriebsbereitem Zustand des Hauptzylinders 10 ebenfalls mit Hydraulikfluid gefüllt ist, steht über eine Verbindungsleitung 64 und ein darin angeordnetes, in Betätigungsrichtung des Hauptzylinders öffnendes Rückschlagventil 66 in Flüssigkeitsverbindung mit der Nachlaufkammer 30. Eine Leitung 68, in der ein in Betätigungsrichtung des Hauptzylinders sperrendes Rückschlagventil 70 angeordnet ist, sowie eine weitere Leitung 72 verbinden die Füllkammer 60 mit dem Vorratsbehälter 38 für Hydraulikfluid. Des weiteren steht die Füllkammer 60 über einen Füllkammerauslaß 74 und eine sich daran anschließende Leitung 76 mit einem der Ansaugseite einer Hydraulikpumpe 78 zugeordneten Fluidspeicher 80 in Flüssigkeitsverbindung. Die Druckseite der Hydraulikpumpe 78 ist mit einer Leitung 82 an den Druckkammerauslaß 40 der ersten Druckkammer 28 angeschlossen.

Der Füllkolben 62 ist auf dem Betätigungsglied 26 befestigt bzw. einstückig damit ausgebildet und über dieses mit dem Primärkolben 22 zur gemeinsamen Verschiebung gekoppelt. Wie dargestellt, weist der Füllkolben 62 eine hydraulisch wirksame Fläche C auf, die der Differenz aus der hydraulisch wirksamen Fläche A des Primärkolbens 22 und der hydraulisch wirksamen Fläche B des Betätigungsgliedes 26 entspricht.

Es wird nun die Funktion der Füllstufe 58 des zweiten Ausführungsbeispiels beschrieben, wobei zunächst davon ausgegangen wird, daß sich das Ventil 52 gemäß Fig. 3 in einer Stellung befindet, in der die Leitung 36 durchgängig ist, so daß die Nachlaufkammer 30 mit dem Vorratsbehälter 38 verbunden ist. Sobald eine Eingangskraft F auf das Betätigungsglied 26 wirkt, wird der damit gekoppelte Füllkolben 62 in der Füllkammer 60 nach links verschoben, wodurch aus der Füllkammer 60 ein entsprechendes Flüssigkeitsvolumen durch die Verbindungsleitung 64 in die Nachlaufkammer 30 überführt wird. Im Anschluß an einen Wegfall der Eingangskraft F werden der Primärkolben 22 und der damit gekoppelte Füllkolben 62, bezogen auf Fig. 3, gemeinsam nach rechts verschoben. Das in der Verbindungsleitung 64 angeordnete Rückschlagventil schließt, während das in der Leitung 68 angeordnete Rückschlagventil 70 aufgrund des in der Füllkammer 60 entstehenden Unterdrucks öffnet, so daß Hydraulikfluid aus dem Vorratsbehälter 38 in die Füllkammer 60 nachfließen kann. Das zusätzliche Flüssigkeitsvolumen der Füllstufe 58 wird somit in der ersten Stellung des Ventils 52 lediglich räumlich verschoben und bleibt wirkungslos.

Befindet sich jedoch das Ventil 52, wie in Fig. 4 dargestellt, in seiner zweiten Stellung, wird wie beim ersten Ausführungsbeispiel ein bestimmtes Flüssigkeitsvolumen aus der ersten Druckkammer 28 in die Nachlaufkammer 30 verschoben, und es stellt sich in letzterer ein Druck ein, der dem Druck in der ersten Druckkammer 28 entspricht. Deshalb wird das aufgrund der gemeinsam mit dem Primärkolben 22 erfolgenden Bewegung des Füllkolbens 62 aus der Füllkammer 60 zu verdrängende Flüssigkeitsvolumen nicht mehr durch die Verbindungsleitung 64 in die Nachlaufkammer 30, sondern durch den Füllkammerauslaß 74 und die sich daran anschließende Leitung 76 in den Fluidspeicher 80 überführt, der zu Beginn des Betätigungsvorgangs des Hauptzylinders 10 leer war.

Die Hydraulikpumpe 78 fördert nun das im Fluidspeicher 80 enthaltene Flussigkeitsvolumen über die Leitung 82 und den Druckkammerauslaß 40 nahezu verzögerungsfrei in die erste Druckkammer 28. Damit steht in der ersten Druckkammer 28 unabhängig von der Stellung des Ventils 52 immer das gleiche Flüssigkeitsvolumen zur Verfügung. Trotz der in der zweiten Stellung des Ventils 52 eingeschalteten Druckübersetzungserhöhung verlängert sich deshalb der Verschiebeweg des Primärkolbens 22 nicht. Der in der ersten Druckkammer 28 erzeugte Bremsdruck wird bei dem zweiten Ausführungsbeispiel also zu einem Teil durch die Leistung der Hydraulikpumpe 78 und zum anderen Teil durch die Eingangskraft F erbracht, welche über die hydraulisch wirksame Fläche B des Betätigungsgliedes 26 in Fluiddruck umgesetzt wird.

Die Hydraulikpumpe 78 ist so ausgelegt, daß ihre Förderleistung nicht durch den sich in der ersten Druckkammer 28 im Rahmen einer Betätigung des Hauptzylinders 10 aufbauenden Bremsdruck beschränkt wird. Sie kann also immer das im Fluidspeicher 80 befindliche Flüssigkeitsvolumen in die Druckkammer 28 fördern. Die Hydraulikpumpe 78 ist darüber hinaus vom nicht selbst ansaugenden Typ, so daß sie nur das während einer Betätigung des Hauptzylinders aus der Füllkammer 60 in den Fluidspeicher 80 verdrängte Flüssigkeitsvolumen in die Druckkammer 28 fördern kann.

## Patentansprüche

1. Hauptzylinderanordnung für eine hydraulische Fahrzeugbremsanlage (12), umfassend einen Hauptzylinder (10) mit einem Gehäuse (18) und einer darin ausgebildeten Bohrung (20), in der ein Kolben (22) abdichtend und verschiebbar geführt ist, der mechanisch mit einem stangenförmigen Betätigungsglied (26) verbunden ist, mit dem eine Eingangskraft zur Druckübersetzung auf den Kolben (22) übertragbar ist, und der in der Bohrung (20) eine Druckkammer (28) und eine betätigungsgliedseitig angeordnete Nachlaufkammer (30) begrenzt, wobei der Kolben (22) eine hydraulisch wirksame Fläche A und das Betätigungsglied (26) eine hydraulisch wirksame Fläche B < A aufweist, **gekennzeichnet durch** eine Einrichtung (50), die die Druckkammer (28) und die Nachlaufkammer (30) wahlweise flüssigkeitsleitend miteinander verbindet, wodurch im miteinander verbundenen Zustand von Druckkammer (28) und Nachlaufkammer (30) die Druckübersetzung des Hauptzylinders (10) um den Faktor A/B erhöht ist.

2. Hauptzylinderanordnung nach Anspruch 1,
**dadurch gekennzeichnet, daß** die Einrichtung (50) zum flüssigkeitsleitenden Verbinden von Druckkammer (28) und Nachlaufkammer (30) ein vorzugsweise elektrisch ansteuerbares Ventil (52) umfaßt, das die Verbindung zwischen der Druckkammer (28) und der Nachlaufkammer (30) wahlweise sperrt oder freigibt.

3. Hauptzylinderanordnung nach Anspruch 1 oder 2,
**dadurch gekennzeichnet, daß** der Nachlaufkammer (30) eine Füllstufe (58) vorgeschaltet ist, die aus einer Füllkammer (60) und einem Füllkolben (62) besteht, wobei der Füllkolben (62) eine hydraulisch wirksame Fläche C = A - B aufweist und die Füllkammer (60) einerseits durch ein in Betätigungsrichtung des Hauptzylinders (10) öffnendes Rückschlagventil (66) mit der Nachlaufkammer (30) und andererseits mit einem der Einlaßseite einer Hydraulikpumpe (78) zugeordneten Fluidspeicher (80) flüssigkeitsleitend verbunden ist, deren Druckseite in Flüssigkeitsverbindung mit der Druckkammer (28) steht.

4. Hauptzylinderanordnung nach Anspruch 3,
**dadurch gekennzeichnet, daß** die Hydraulikpumpe (78) nur das während einer Betätigung des Hauptzylinders (10) aus der Füllkammer (60) in den Fluidspeicher (80) verdrängte Flüssigkeitsvolumen in die Druckkammer (28) fördern kann.

5. Hauptzylinderanordnung nach Anspruch 4,
**dadurch gekennzeichnet, daß** die Hydraulikpumpe (78) vom nicht selbstansaugenden Typ ist.

6. Hauptzylinderanordnung nach einem der Ansprüche 3 bis 5,
**dadurch gekennzeichnet, daß** der Füllkolben (62) durch das Betätigungsglied (26) mit dem Kolben (22) gekoppelt ist.

7. Hauptzylinderanordnung nach einem der vorhergehenden Ansprüche,
**dadurch gekennzeichnet, daß** ein als Schwimmkolben ausgebildeter zweiter Kolben (24) abdichtend und verschiebbar in der Bohrung (20) geführt ist, der in letzterer eine zweite Druckkammer (32) begrenzt.

8. Hauptzylinderanordnung nach einem der vorhergehenden Ansprüche,
**dadurch gekennzeichnet, daß** ein fahrerunabhängig betätigbarer Bremskraftverstärker, insbesondere ein Unterdruckbremskraftverstärker, mit dem Betätigungsglied (26) gekoppelt ist.

9. Hauptzylinderanordnung nach Anspruch 8,
**dadurch gekennzeichnet, daß** die Einrichtung (50) zum flüssigkeitsleitenden Verbinden von Druckkammer (28) und Nachlaufkammer (30) ein Steuergerät umfaßt, welches bei einer fahrerunabhängigen Betätigung des Bremskraftverstärkers ein Signal zur Herstellung der flüssigkeitsleitenden Verbindung zwischen Druckkammer (28) und Nachlaufkammer (30) abgibt.

## Claims

1. Master cylinder arrangement (10) for a vehicle hydraulic braking system (12), comprising a master cylinder (10) having a housing (18) and a bore (20) formed therein in which a piston (22) is guided in a sealing and displaceable manner and is mechanically connected to a rod-like actuating element (26), with which an input force can be transmitted to the piston (22) for pressure intensification, said piston defining, in the bore (20), a pressure chamber (28) and a replenishing chamber (30) arranged on the actuating element side, the piston (22) having a hydraulically active area A and the actuating element (26) having a hydraulically active area B < A,
**characterized by** a device (50) which selectively provides a fluid connection between the pressure chamber (28) and the replenishing chamber (30), as a result of which, when the pressure chamber (28) and replenishing chamber (30) are connected to each other, the pressure intensification of the master cylinder (10) is increased by the factor A/B.

2. Master cylinder arrangement according to Claim 1,
**characterized in that** the device (50) for providing a fluid connection between pressure chamber (28) and replenishing chamber (30) comprises a preferably electrically actuatable valve (52), which optionally blocks or clears the connection between the pressure chamber (28) and the replenishing chamber (30).

3. Master cylinder arrangement according to Claim 1 or 2, **characterized in that** a filling stage (58), which comprises a filling chamber (60) and a filling piston (62), is connected upstream of the replenishing chamber (30), the filling piston (62) having a hydraulically active area C = A - B and the filling chamber (60) having a fluid connection, on the one hand, to the replenishing chamber (30) via a nonreturn valve (66) that opens in the actuating direction of the master cylinder (10), and, on the other hand, to a fluid reservoir (80) assigned to the inlet side of a hydraulic pump (78), whose delivery side has a fluid connection to the pressure chamber (28).

4. Master cylinder arrangement according to Claim 3,
**characterized in that** the hydraulic pump (78) is able to deliver into the pressure chamber (28) only that volume of fluid which is forced from the filling chamber (60) into the fluid reservoir (80) during an actuation of the master cylinder (10).

5. Master cylinder arrangement according to Claim 4,
**characterized in that** the hydraulic pump (78) is of the non self-priming type.

6. Master cylinder arrangement according to one of Claims 3 to 5, **characterized in that** the filling piston (62) is coupled to the piston (22) via the actuating element (26).

7. Master cylinder arrangement according to one of the preceding claims,
**characterized in that** a second piston (24), which is designed as a floating piston, is guided in a sealing and displaceable manner in the bore (20) and, in the latter, bounds a second pressure chamber (32).

8. Master cylinder arrangement according to one of the preceding claims,
**characterized in that** a brake booster that can be actuated independently of the driver, in particular a vacuum brake booster, is coupled to the actuating element (26).

9. Master cylinder arrangement according to Claim 8, **characterized in that** the device (50) for providing a fluid connection between pressure chamber (28) and replenishing chamber (30) comprises a control device which, if the brake booster is actuated independently of the driver, outputs a signal to establish the fluid connection between pressure chamber (28) and replenishing chamber (30).

## Revendications

1. Dispositif de maître cylindre pour un système de freinage hydraulique (12) de véhicule, comprenant un maître cylindre (10) comprenant un boîtier (18) et un alésage (20) formé dans celui-ci, dans lequel est guidé un piston (22) coulissant et réalisant une isolation étanche, qui est lié mécaniquement à un organe d'actionnement (26) en forme de tige, avec lequel une force d'entrée peut être transférée au piston (22) pour sa conversion en pression, et qui délimité dans l'alésage (20) une chambre de pression (28) et une chambre de suite (30) disposée du côté de l'organe d'actionnement, le piston (22) présentant une surface hydraulique efficace A et l'organe d'actionnement (26) une surface hydraulique efficace B < A, **caractérisé par** un dispositif (50) qui relie à volonté en communication par fluide entre elles la chambre de pression (28) et la chambre de suite (30), ce qui augmente à l'état relié entre elles de la chambre de pression (28) et de la chambre de suite (30) du facteur A/B la conversion en pression du maître cylindre (10).

2. Dispositif selon la revendication 1,
**caractérisé en ce que** le dispositif (50) comprend une vanne (52) pouvant de préférence être commandée de façon électrique pour le raccordement en communication par fluide de la chambre de pression (28) et de la chambre de suite (30) qui ferme ou ouvre à volonté la communication entre la chambre de pression (28) et la chambre de suite (30).

3. Dispositif selon la revendication 1 ou 2,
**caractérisé en ce qu'**un étage de remplissage (58) est monté en amont de la chambre de suite (30), qui se compose d'une chambre de remplissage (60) et d'un piston de remplissage (62), le piston de remplissage (62) ayant une surface hydraulique efficace C = A - B et **en ce que** la chambre de remplissage (60) est reliée d'une part par un clapet de retenue (66) s'ouvrant dans le sens de l'actionnement du maître cylindre (10) à la chambre de suite (30) et est reliée d'autre part en communication par fluide à un réservoir de fluide (80) associé au côté d'entrée d'une pompe hydraulique (78) dont le côté de pression est en communication par fluide avec la chambre de pression (28).

4. Dispositif selon la revendication 3,
**caractérisé en ce que** la pompe hydraulique (78) ne peut délivrer dans la chambre de pression (28) que le volume de liquide refoulé de la chambre de remplissage (60) dans le réservoir de fluide (30) pendant un actionnement du maître cylindre (10).

5. Dispositif selon la revendication 4,
**caractérisé en ce que** la pompe hydraulique (78) est du type non auto-aspirante.

6. Dispositif selon l'une quelconque des revendications 3 à 5,
**caractérisé en ce que** le piston de remplissage (62) est accouplé par l'intermédiaire de l'organe d'actionnement (26) au piston (22).

7. Dispositif selon l'une quelconque des revendications précédentes,
**caractérisé en ce qu'**un deuxième piston (24) réalisé sous forme de piston flottant est guidé coulissant en réalisant une isolation étanche dans l'alésage (20), qui délimite dans ce dernier une deuxième chambre de pression (32).

8. Dispositif selon l'une quelconque des revendications précédentes,
**caractérisé en ce qu'**un servofrein pouvant être actionné indépendamment du conducteur, en particulier un servofrein à dépression, est accouplé à l'organe d'actionnement (26).

9. Dispositif selon la revendication 8, **caractérisé en ce que** le dispositif (50) comprend un dispositif de commande pour le raccordement en communication par fluide de la chambre de pression (28) et de la chambre de suite (30) qui délivre, lors d'un actionnement du servofrein indépendant du conducteur, un signal visant à la réalisation de la communication par fluide entre la chambre de pression (28) et la chambre de suite (30).
